# EUROPEAN PATENT APPLICATION

(11) **EP 3 203 731 A1**
(43) Date of publication of application: **09.08.2017**
(21) Application number: 16167489.0
(22) Date of filing: 28.04.2016
(51) Int. Cl.: H04N 7/18, G08B 13/196, H04L 12/26, H04L 29/08

(54) **NETWORK CAMERA CAPABLE OF DETECTING SIGNAL STRENGTH OF WIRELESS NETWORK AND METHOD THEREOF**

(30) Priority: 04.02.2016 TW 105103828
(71) Applicant: D-Link Corporation, Taipei City (TW)
(72) Inventor: CHEN, Ching-Hung, Taipei City (TW)
(74) Representative: Karakatsanis, Georgios

(57) **Abstract**

The present invention is to provide a network camera capable of detecting signal strength of wireless network and a method thereof, wherein a signal strength table is stored in the network camera and includes a first signal strength value and a second signal strength value lower than the first signal strength value, and the network camera can detect current signal strength of the wireless network to generate a received signal strength indicator (RSSI), compare the RSSI with the first signal strength value and the second signal strength value, and then control a luminous indicating unit installed thereon to generate light corresponding to the comparing result. Thus, a user only needs to check the light of the luminous indicating unit to determine whether or not the signal strength of the wireless network at current position is good and the location of the network camera is needed to be adjusted accordingly.

## Description

### FIELD OF THE INVENTION

The present disclosure generally relates to a network camera, more particularly to a network camera capable of detecting signal strength of wireless network and showing current status of the signal strength accordingly.

### BACKGROUND OF THE INVENTION

In recent year, with the progress in network technology, the requirement in remote communication and the rise of community safety awareness, security monitoring industry is rapidly grown and monitor cameras become ubiquitous equipment in people's life. Image data captured by a "digital camera" can be transmitted to network in digital file format for user to remotely monitor, so this kind of the digital camera is also called as a network camera. The network camera has advantages of high-definition image, encrypted transmission, multi-function integration (such as people counting, license plate recognition, network alert and so on), so the network camera gradually becomes an important target of manufacturers' research developments in relevant field.

The network camera is usually mounted at a specific location to capture image or record video for surveillance personnel to monitor an abnormal event occurred in the specific location and further take necessary countermeasures. While setting and installing a video surveillance system, an installer must mount the network camera at a correct position in the specific location to ensure an image-capturing area of the network camera to cover all of the area to be monitored, whereby the surveillance personnel or an image recognition system can determine a full picture of occurrence of the abnormal event based on the image captured or video recorded by the network camera. However, in some locations where network environment is imperfect, it is not easy for the user to mount the network cameras at all locations to be monitored. To solve the problem, some manufacturers use wireless network technology to transmit the image captured or video recorded by the network camera.

However, the wireless network still has limitation in the signal transmission range and its signal strength is interfered easily by a barrier (such as a wall), which results in variations of signal strength in different areas within the same wireless network and even form a signal blind (that is, a blind spot where the signal of the wireless network is unable to be received). If the user mounts the network camera at the location where the signal strength of the wireless network is weaker, the network camera may be unable to transmit the captured image or recorded video and fail to play its role. After mounting the network camera at the predetermined location, the user usually test whether the network camera can normally transmit the captured image. If the network camera fails to transmit the captured image or transmits bad-quality images (such as discontinuous images, or images with excessive pause time), the user must demount the network camera and then mount the network camera at other location again, or extra dispose other network equipment (such as a bridge, a repeater and so on), and respectively set the configuration of the network camera and the network equipment, thereby enabling the normal functioning of the network camera. But this way of mounting the network camera spends the user a lot of time, and the network camera is easily damaged during the process of repeatedly mounting and demounting the network camera.

In conclusion, while mounting a conventional network camera, the user cannot check the signal strength of the wireless network at the current mounting location until the network camera is mounted completely and practically operated to check whether the image can be normally transmitted, so the user must repeatedly mount and test the network camera and it costs a lot of time. In addition, most of the network cameras are mounted at a high location to capture the image in a larger range, so it is very inconvenient for the user to repeatedly mount and demount the network camera. Therefore, how to provide an improved network camera to solve above-mentioned problems is an important topic for network camera manufacturers.

### SUMMARY OF THE INVENTION

An objective of the present disclosure is to provide a network camera capable of detecting signal strength of wireless network, and a method thereof. The network camera includes a camera unit, a luminous indicating unit, a storage unit, a wireless network unit and a control unit. The camera unit is configured to capture an external image. The luminous indicating unit is configured to respectively generate light indicative of a high signal strength status, a middle signal strength status and a low signal strength status. The storage unit is configured to store a signal strength table containing a first signal strength value and a second signal strength value lower than the first signal strength value. The wireless network unit is configured to transmit the image captured by the camera unit to external network, receive a wireless network signal transmitted from the external network, and detect signal strength of the wireless network to generate signal strength information corresponding to the wireless network. The signal strength information contains a RSSI. The control unit is electrically connected with the camera unit, the luminous indicating unit, the storage unit and the wireless network unit respectively, and configured to receive the signal strength information, parse the RSSI contained in the signal strength upon receipt of the signal strength information, and compare the RSSI with the first signal strength value and the second signal strength value contained in the signal strength table. Under a condition that the RSSI is higher than the first signal strength value, the control unit controls the luminous indicating unit to generate light indicating a high signal strength status. Under a condition that the RSSI is ranged between the first signal strength value and the second signal strength value, the control unit controls the luminous indicating unit to generate light indicating a middle signal strength status. Under a condition that the RSSI is lower than the second signal strength value, the control unit controls the luminous indicating unit to generate light indicating a low signal strength status. Therefore, upon above-mentioned indicative light generated by the luminous indicating unit, the user can check whether the signal strength of the wireless network at current position is good, so as to adjust the location of the network camera. By means of technology of the present disclosure, the convenience for the user in installing and using the network camera can be greatly improved.

### BRIEF DESCRIPTION OF THE DRAWINGS

The detailed structure, operating principle and effects of the present disclosure will now be described in more details hereinafter with reference to the accompanying drawings that show various embodiments of the present disclosure as follows.
Fig. 1 is a structural view of hardware of a network camera of the present disclosure.
Fig. 2 is a schematic view of appearance of the network camera of the present disclosure.
Fig. 3 is a flowchart of operating the network camera of the present disclosure.

### DETAILED DESCRIPTION OF THE PREFERRED EMBODIMENTS

Reference will now be made in detail to the exemplary embodiments of the present disclosure, examples of which are illustrated in the accompanying drawings. Therefore, it is to be understood that the foregoing is illustrative of exemplary embodiments and is not to be construed as limited to the specific embodiments disclosed, and that modifications to the disclosed exemplary embodiments, as well as other exemplary embodiments, are intended to be included within the scope of the appended claims. These embodiments are provided so that this disclosure will be thorough and complete, and will fully convey the inventive concept to those skilled in the art. The relative proportions and ratios of elements in the drawings may be exaggerated or diminished in size for the sake of clarity and convenience in the drawings, and such arbitrary proportions are only illustrative and not limiting in any way. The same reference numbers are used in the drawings and the description to refer to the same or like parts.

It will be understood that, although the terms 'first', 'second', 'third', etc., may be used herein to describe various elements, these elements should not be limited by these terms. The terms are used only for the purpose of distinguishing one component from another component. Thus, a first element discussed below could be termed a second element without departing from the teachings of embodiments. As used herein, the term "or" includes any and all combinations of one or more of the associated listed items.

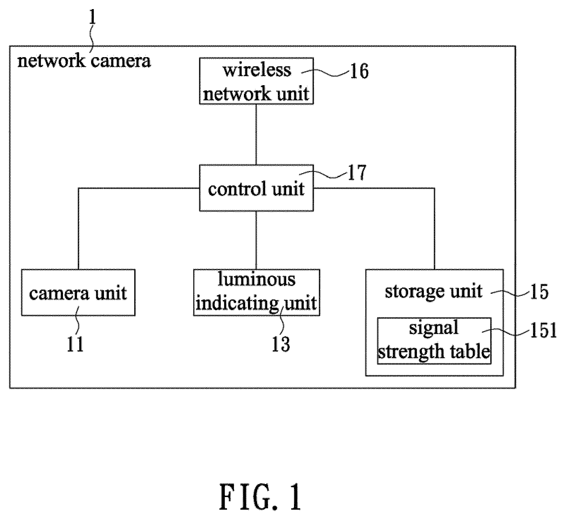

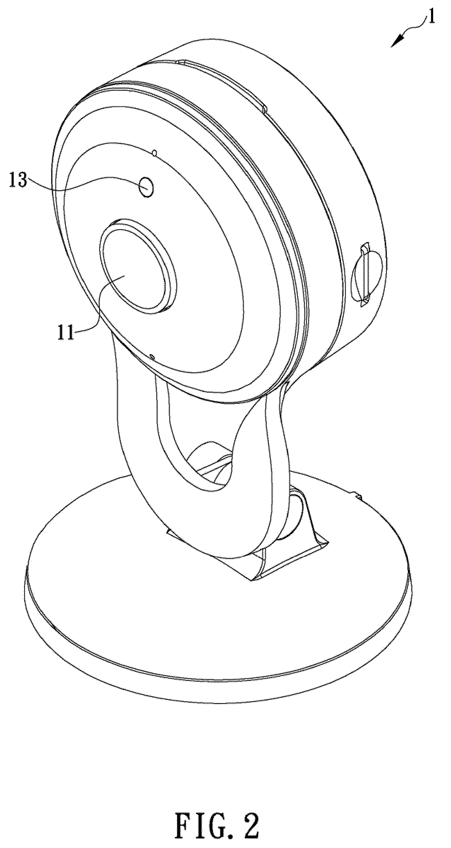

The present disclosure provides a network camera capable of detecting signal strength of wireless network, and a method thereof. Please refer to Figs. 1 and 2. The network camera 1 includes a camera unit 11, a luminous indicating unit 13, a storage unit 15, a wireless network unit 16 and a control unit 17. The camera unit 11 is electrically connected with the control unit 17, and includes camera lens, a processing chip and other elements, and is configured to capture an external image, perform various image processes (such as processes of image compression, format conversion and so on) on the captured image, and transmit the processed image to the control unit 17. However, in other embodiment of the present disclosure, manufacturers can adjust a hardware structure of the camera unit 11 upon product requirement such as home use, night use, and use for driving and so on. It should be noted that whether the camera unit 11 has the image process function or not, any kind of the camera unit 11 having the function of capturing the external image is within the scope of the appended claims.

Please refer back to Fig. 1. The control unit 17 is electrically connected to the wireless network unit 16 for interconnection with external network through the wireless network unit 16. The control unit 17 is configured to transmit the image captured by the camera unit 11 to the external network, such that, through a notebook computer, a desktop computer, a tablet computer or a smartphone, the remote user located in the external network can view the images captured by the network camera 1. The wireless network unit 16 further receives a wireless network signal (such as a Wi-Fi signal) from the external network and detects signal strength of the wireless network to generate signal strength information containing a received signal strength indicator (RSSI). It is particularly noted that the RSSI is a negative dBm value for indicating the signal strength of the wireless network. Higher signal strength of the wireless network indicates a better interconnection quality; in contrast, the lower signal strength indicates a poor interconnection quality or even unable to interconnect. The way of detecting the signal strength of the wireless network is a conventional technology, so its detailed description is omitted. Any kind of the wireless network unit 16 capable of receiving the wireless network signal and detecting the signal strength of the wireless network is within the scope of the appended claims.

Please refer back to Fig. 1. The storage unit 15 is electrically connected with the control unit 17 and configured to store a signal strength table 151. In the embodiment, the signal strength table 151 includes a first signal strength value and a second signal strength value lower than the first signal strength value. For example, the first signal strength value may be -70 dBm and the second signal strength value may be -80 dBm. Please refer back to Figs. 1 and 2. The luminous indicating unit 13 is electrically connected with the control unit 17 and configured to emit light, and adjust color, brightness, the number of the light emitted therefrom based on a control signal of the control unit 17. For example, in the embodiment, the luminous indicating unit 13 may be one light emitting diode (LED) which is exposed out of the network camera 1 (as illustrated in Fig. 2). The luminous indicating unit 13 can emit light with different colors for respectively indicating a high signal strength status (for example, a green light), a middle signal strength status (for example, an orange light) and a low signal strength status (for example, a dark light), but the other embodiment of the present disclosure is not limited thereto. For example, in the other embodiment, the luminous indicating unit 13 can include two LEDs, one emits green light for indicating the high signal strength status and the other emits orange light for indicating the middle signal strength status, and these two LEDs can be turned off for indicating the low signal strength status. In other embodiment, the luminous indicating unit 13 can include five LEDs with the same color, and all of the five LEDs are turned on for indicating the high signal strength status, three of the five LEDs are turned on for indicating the middle signal strength status, and only one of the five LEDs is turned on for indicating the low signal strength status. Therefore, the user can clearly obtain the status of the signal strength by viewing the luminous indicating unit 13.

Please refer back to Figs. 1 and 2. When the user turns on the network camera 1, the wireless network unit 16 receives the signal of the wireless network in current environment and generates signal strength information corresponding to the wireless network. After receiving the signal strength information, the control unit 17 parses the content of the signal strength information to obtain the RSSI. Next, the control unit 17 compares the RSSI with the first and second signal strength values based on the signal strength table 151. For example, if the RSSI is -65 dBm, the control unit 17 determines the RSSI to be higher than the first signal strength value (-70 dBm) and then transmits the control signal indicative of high signal strength status to the luminous indicating unit 13 to control the luminous indicating unit 13 to emit green light which indicates the high signal strength status; if the RSSI is -75 dBm, the control unit 17 determines the RSSI to be ranged between the first signal strength value (-70 dBm) and the second signal strength value (-80 dBm) and then transmits the control signal indicative of the middle signal strength status to control the luminous indicating unit 13 to emit orange light which indicates the middle signal strength status; if the RSSI is -85 dBm, the control unit 17 determines the RSSI smaller than the second signal strength value (-80 dBm) and then transmits the control signal indicative of low signal strength status to the luminous indicating unit 13, so that the luminous indicating unit 13 does not emit light for indicating the low signal strength status. After placing the network camera 1 in a desired location, the user can directly view the light generated by the luminous indicating unit 13 to check whether the signal strength of the wireless network at this location is good. Therefore, the user can adjust the location of the network camera 1 upon above-mentioned indicative light, and the convenience for the user in installing and using the network camera can be greatly improved.

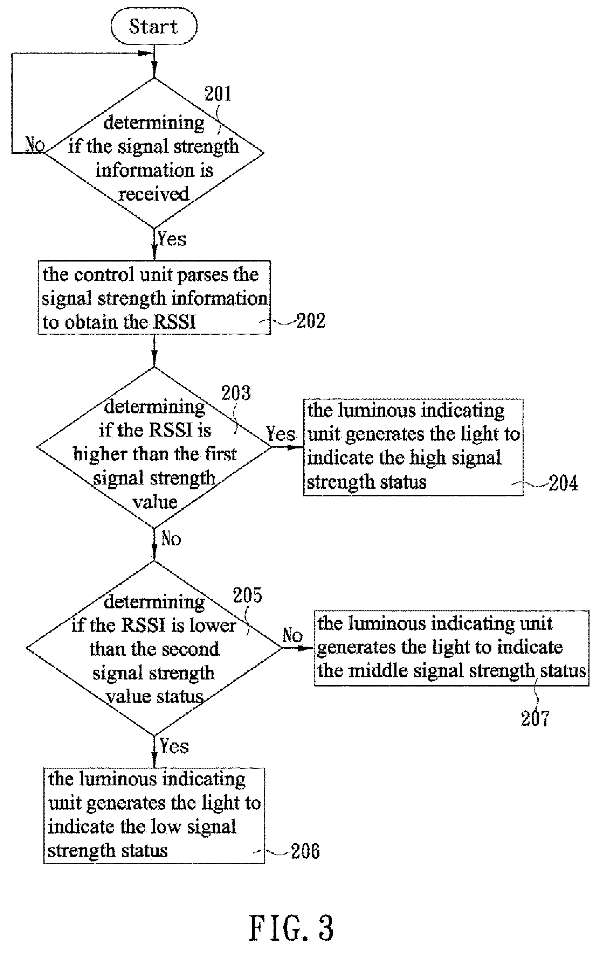

In order to clearly illustrate the method of the present disclosure, a process flow of the control unit 17 of the present disclosure is described below. Please refer to Figs. 1 and 3.

In step 201, the control unit 17 determines whether the signal strength information is received; if yes, the control unit 17 proceeds step 202; otherwise, the control unit 17 proceeds step 201.

In the step 202, the control unit 17 parses the signal strength information to obtain the RSSI, and then proceeds step 203.

In the step 203, based on the signal strength table 151, the control unit 17 determines whether the RSSI is higher than the first signal strength value; if the RSSI is higher than the first signal strength value, the control unit 17 proceeds the step 204; otherwise, the control unit 17 proceeds the step 205.

In the step 204, the control unit 17 transmits the control signal indicative of the high signal strength status to the luminous indicating unit 13, so that the luminous indicating unit 13 generates the light to indicate the high signal strength status.

In the step 205, the control unit 17 determines whether the RSSI is lower than the second signal strength value status; if yes, the control unit 17 proceeds step 206; otherwise, the control unit 17 proceeds step 207.

In the step 206, the control unit 17 transmits the control signal indicative of the low signal strength status to the luminous indicating unit 13, so that the luminous indicating unit 13 generates the light to indicate the low signal strength status.

In the step 207, the control unit 17 transmits the control signal indicative of the middle signal strength status to the luminous indicating unit 13, so that the luminous indicating unit 13 generates the light to indicate the middle signal strength status.

In conclusion, as shown in Fig. 1, the user can check the signal strength of the wireless network at the mounting location before fixedly mounting the network camera 1, which prevents the network camera 1 from being fixed at the location where the signal of the wireless network is too weak to reliably transmit the captured image to the user in practical use. In addition, the user can detect whether a signal blind exists in the house by the luminous indicating unit 13, so as to further install other network device (such as a signal booster, a repeater and so on) to expand a signal coverage of the wireless network, whereby the user can also plan the configuration locations of all network devices together.

The above-mentioned descriptions represent merely the exemplary embodiment of the present disclosure, without any intention to limit the scope of the present disclosure thereto. Various equivalent changes, alternations or modifications based on the claims of present disclosure are all consequently viewed as being embraced by the scope of the present disclosure.

## Claims

1. A network camera capable of detecting signal strength of wireless network, comprising:
a camera unit (11) configured to capture an external image;
a luminous indicating unit (13) configured to respectively generate light indicative of a high signal strength status, a middle signal strength status and a low signal strength status;
a storage unit (15) configured to store a signal strength table (151) containing a first signal strength value and a second signal strength value lower than the first signal strength value;
a wireless network unit (16) configured to transmit the image captured by the camera unit (11) to external network, receive a wireless network signal transmitted from the external network, and detect signal strength of the wireless network to generate signal strength information corresponding to the wireless network, wherein the signal strength information contains a RSSI; and
a control unit (17) electrically connected with the camera unit (11), the luminous indicating unit (13), the storage unit (15) and the wireless network unit (16) respectively, and configured to receive the signal strength information, parse the RSSI contained in the signal strength upon receipt of the signal strength information, and compare the RSSI with the first signal strength value and the second signal strength value contained in the signal strength table (151); wherein under a condition that the RSSI is higher than the first signal strength value, the control unit (17) controls the luminous indicating unit (13) to generate light indicating a high signal strength status; wherein under a condition that the RSSI is ranged between the first signal strength value and the second signal strength value, the control unit (17) controls the luminous indicating unit (13) to generate light indicating a middle signal strength status; wherein under a condition that the RSSI is lower than the second signal strength value, the control unit (17) controls the luminous indicating unit (13) to generate light indicating a low signal strength status.

2. The network camera according to claim 1, wherein the luminous indicating unit (13) is a light emitting diode capable of emitting light with multiple colors, so as to generate light with difference colors to indicate the high signal strength status, the middle signal strength status and the low signal strength status.

3. The network camera according to claim 1, wherein the luminous indicating unit (13) comprises a plurality of light emitting diodes which emit light with colors different from each other, so as to generate light with difference colors to indicate the high signal strength status, the middle signal strength status and the low signal strength status.

4. The network camera according to claim 1, wherein the luminous indicating unit (13) comprises a plurality of light emitting diodes, and different numbers of the light emitting diodes are respectively turned on to emit light to indicate the high signal strength status, the middle signal strength status and the low signal strength status.

5. A method of using a network camera to detect a signal strength of wireless network, the network camera comprises a camera unit (11), a luminous indicating unit (13), a storage unit (15), a wireless network unit (16) and a control unit (17), the control unit (17) electrically connected with the camera unit (11), the luminous indicating unit (13), the storage unit (15) and the wireless network unit (16) respectively, and the wireless network unit (16) configured to detect signal strength of the wireless network to generate signal strength information corresponding to the wireless network, and the storage unit (15) configured to store a signal strength table (151) containing a first signal strength value and a second signal strength value lower than the first signal strength value, the luminous indicating unit (13) configured to respectively generate light indicating a high signal strength status, a middle signal strength status and a low signal strength status, and the camera unit (11) configured to capture an external image, and the method comprising:
receiving the signal strength information by the control unit (17), and parsing content of the signal strength information by the control unit (17) to obtain an RSSI; and
comparing the RSSI with the first signal strength value and the second signal strength value contained in the signal strength table (151), and controlling the luminous indicating unit (13) to generate light respectively indicating the high signal strength status, the middle signal strength status and the lower signal strength status based on a comparison result.

6. The method according to claim 5, wherein under a condition that the control unit (17) determines the RSSI to be greater than the first signal strength value, the control unit (17) transmits a control signal indicative of the high signal strength status to the luminous indicating unit (13), so that the luminous indicating unit (13) generates light indicating the high signal strength status.

7. The method according to claim 5, wherein under a condition that the control unit (17) determines the RSSI to be lower than the first signal strength value and higher than the second signal strength value, the control unit (17) transmits a control signal indicative of the middle signal strength status to the luminous indicating unit (13), so that the luminous indicating unit (13) generates light indicating the middle signal strength status.

8. The method according to claim 5, wherein under a condition that the control unit (17) determines the RSSI to be lower than the second signal strength value, the control unit (17) transmits a control signal indicative of the low signal strength status to the luminous indicating unit (13), so that the luminous indicating unit (13) generates light indicating the low signal strength status.
